# EUROPEAN PATENT APPLICATION

(11) **EP 3 249 585 A1**
(43) Date of publication of application: **29.11.2017**
(21) Application number: 17172565.8
(22) Date of filing: 23.05.2017
(51) Int. Cl.: G06Q 10/00

(54) **SYSTEM AND METHOD FOR MONITORING PART LOCATION AND PREDICTING REPLACEMENT**

(30) Priority: 25.05.2016 US 201662341135 P; 19.05.2017 US 201715599696
(71) Applicant: Construction Forms Inc., Port Wasington, WI 53074 (US)
(72) Inventor: Bury, James L., Mequon WI 53097 (US); Hamilton, Thomas E., Rye NY 10580 (US); Bullis, Matthew Thomas, Golden CO 80401 (US)
(74) Representative: Somervell, Thomas Richard

(57) **Abstract**

A method and system for monitoring replaceable components of a work unit is disclosed. The method assigns an RFID tag to each wear part of a work unit. Prior to each operating cycle, the RFID tags are read and the RFID tags are correlated to corresponding wear parts. During operation of the work unit, operating parameters are read from the pumping unit and associated with each of the wear parts. A real-time life cycle status is determined for each of the wear parts based upon historic operating parameters and present operating parameters. Based upon the real-time life cycle status, the system and method of the present disclosure predicts the remaining wear life and relays this information to interested third parties. Interested third parties can then contact the equipment owner to provide information as to when parts need to be replaced prior to failure.

## Description

### CROSS REFERENCE TO RELATED APPLICATION

The present application is based on and claims priority U.S. Provisional Patent Application Serial No. 62/341,135, filed on May 25, 2016, the disclosure of which is incorporated herein by reference.

### BACKGROUND

The present disclosure generally relates to a system and method for monitoring replaceable components of a work unit, such as a mobile concrete pumping machine or any other type of similar work unit that includes parts that are subject to wear. More specifically, the present disclosure relates to a system and method that provides an RFID tag on each of the wear parts and utilizes a monitoring unit to detect the RFID tags on the parts on the work unit and predict the time of replacement for each of the wear parts.

### SUMMARY

The present disclosure relates to a system and method that combines RFID identified parts on work equipment, a mobile RFID reader and an antenna that senses the RFID tag's presence and wireless communication of the received RFID information to a remote server. The method of the present disclosure senses, gathers, and wirelessly sends real-time equipment status/performance information to a remote server for the purpose of monitoring the mobile equipment information inputs. The method and system of the present disclosure uses these performance parameters to accumulate usage data on specific wear parts for the entire time that they are in use. The information is used and combined with observed wear/aging characteristics by the part manufacturer to determine a user-specific part life-cycle prediction model. The information is used to continuously predict the incremental wear/aging that occurs based upon the RFID identified parts mounted to the equipment.

In accordance with the present disclosure, the system is able to continuously track the predicted cumulative wear on a part and determine where in the identified part's life-cycle the part currently exists. This information can be used to recommend any adjustments to the location, orientation or use of the part to extend the life of the part. The information can be used to forecast when the part will need to be replaced given its percentage of life used and the current rate of wear over a specific period of use. Further, this information can be used to warn appropriate personnel, such as the work unit operator or equipment owner, when the percentage of life-cycle exceeds the minimum requirements to avoid unsafe conditions, equipment damage and/or equipment downtime. The information can be used by a product manufacturer to adjust production cycles, target sales and marketing efforts and provide information to distributors in the supply chain.

Various other features, objects and advantages of the invention will be made apparent from the following description taken together with the drawings.

### BRIEF DESCRIPTION OF THE DRAWINGS

The drawings illustrate the best mode presently contemplated of carrying out the disclosure. In the drawings:
Fig. 1 is a schematic illustration of a mobile work unit and the communication to a mobile information unit;
Fig. 2 is a schematic illustration of the communication that takes place in accordance with the present disclosure; and
Fig. 3 is a flowchart illustrating the operating steps of one embodiment of the method of the present disclosure.

### DETAILED DESCRIPTION

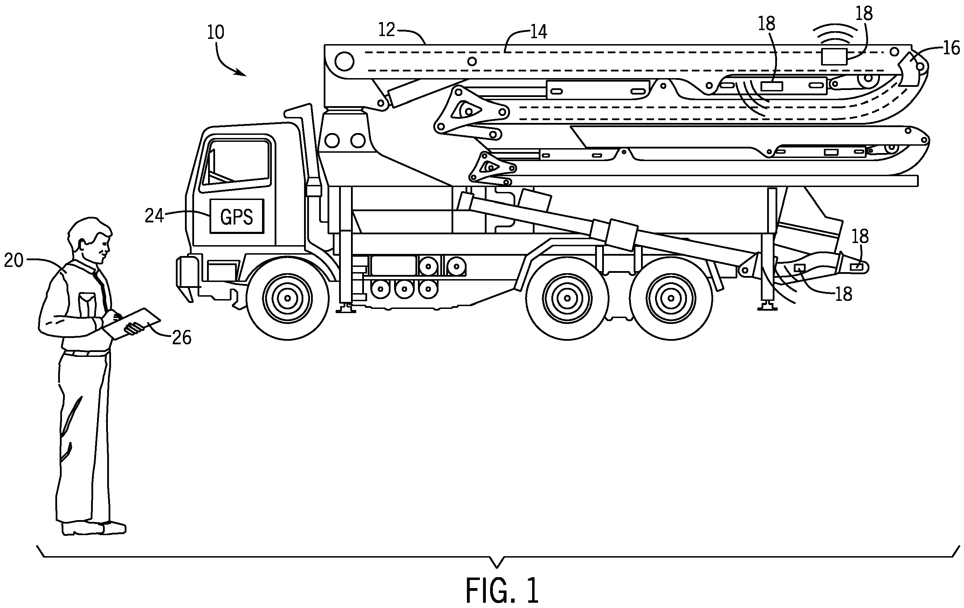

Fig. 1 illustrates a first embodiment of the present disclosure. As shown in Fig. 1, a mobile work unit, such as a concrete pumping unit 10, incorporates the method and system of the present disclosure. Although one type of mobile work unit is shown in the embodiment of Fig. 1, it is contemplated that the system and method of the present disclosure could be utilized with various different types of either stationary or mobile work units that include parts and components that are subject to wear. In the embodiment shown in Fig. 1, the mobile pumping unit 10 includes a boom arm 12 that includes sections of pipe 14 that are joined to each other by pipe joints 16. During use of the mobile pumping unit 10, concrete is pumped through the pipe sections 14 and joints 16 for distribution at a work site. Since concrete is a coarse material, both the pipe sections 14 and joints 16 are subject to wear and must be replaced on a regular interval. This also applies to other types of concrete pumping work units, such as tower mounted concrete placing booms. These work units include a pumping unit and a separate placing boom arm that is mounted to a tower, such as typically used during the construction of high-rise buildings. Further, other embodiments are contemplated in which concrete pipe sections are attached to a building and concrete is pumped to a distribution location. Each of these embodiments is contemplated as being within the scope of the present disclosure.

In accordance with the present disclosure, various different operating components on the mobile pumping unit 10 include separate, independently identified RFID tags 18. The RFID tags 18 are standard components that can communicate identification information over a restricted transmission range. This transmitted information typically includes identification information about the tag, which can then be correlated to a component on the mobile pumping unit 10. Although RFID tags 18 are contemplated as being the most preferred embodiment of the present disclosure, the RFID tags 18 could be replaced by other identification devices, which could be either active or passive. As an example, a passive identification devices could include unique bar codes, identification numbers or other identifier on the wear parts of the mobile pumping unit. Active identification devices could include other devices that can communicate with a reading device using communication techniques other than RFID. Although RFID tags will be used in the following description, it should be understood that other identification devices could be used, whether active or passive in nature.

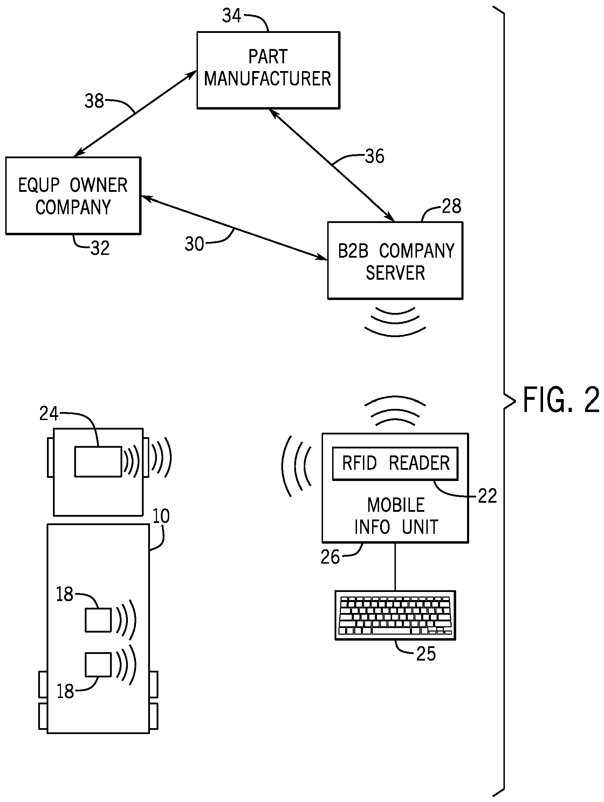

As shown in Figs. 1 and 2, an operator 20 can use a mobile information unit 26 that includes an RFID reader 22 to receive the RFID information signals from the tags 18. The mobile information unit 26 including the RFID reader 22 can be one of many different types of equipment, such as a tablet or any other type of system that is able to receive RFID signals from the RFID tags 18 on the mobile pumping unit 10. In the embodiment shown, the mobile information unit 26 includes a second type of wireless communication device which allows the mobile information unit 26 to communicate to remote locations. The second type of wireless communication device could communicate through Wi-Fi, cellular communication protocols or other type of wireless protocol. In this manner, the mobile information unit 26 is able to communicate with remove servers or monitoring locations. Although a separate mobile information unit 26 is shown, it is contemplated that the work unit 10 could include the information unit mounted to the work unit. In such an embodiment, the RFID reader could detect all of the RFID tags on the work unit and transmit information from the work unit using wireless communication techniques.

In an embodiment that includes passive identification devices, the operator of the mobile pumping unit would need to enter the identification information for each of the wear parts on the mobile pumping unit into the mobile information unit 26. In an example in which the identification device is a bar code, the bar codes for each of the wear parts would be scanned. In other embodiments, the operator could manually enter identification information for each of the wear parts, such as through a keyboard.

It is also contemplated that the mobile pumping unit 10 can include a communication and monitoring unit 24 that allows for monitoring operating parameters and systems in the pumping unit 10 and tracking of the location of the mobile pumping unit 10. The monitoring unit 24 can monitor a wide variety of operating parameters such as engine RPMs, engine horsepower, pumping pipeline pressure, pump operating run time as well other information relating to operation of the mobile pumping unit. The monitoring unit 24 typically will include a GPS unit that would identify the location of the mobile pumping unit 10, as is used in many mobile truck monitoring applications. In a contemplated embodiment, the information unit 26 could either be incorporated into the monitoring unit 24 or could be in communication with the monitoring unit 24 to relay the RFID tags identifications from the work unit.

Referring now to Fig. 2, details of the system and method of the present disclosure are further described. As shown in Fig. 2, the mobile pumping unit 10 includes the plurality of RFID tags 18 that are each able to communicate information away from the mobile pumping unit 10. The RFID reader 22, which may be part of a larger mobile information unit 26, is able to receive the RFID information from each of the individual tags 18 on the mobile unit 10. It is contemplated that a user/operator for the mobile pumping unit 10 will walk around the mobile pumping unit 10 as part of a pre-operation protocol, during which walk around the RFID reader 22 can sense each of the individual RFID tags 18. Typically, the RFID tag 18 will have a transmission range that allows the RFID reader 22 of the mobile unit 26 to read each of the individual tags and record such reading. If the RFID reader is part of a system mounted to the work unit, the RFID reader 22 would need to be within the transmission range of each of the RFID tags 18, which would be possible in smaller systems and units. When used with a large mobile concrete pumping unit, it is contemplated that the RFID reader 22 would be mobile and moved around the work unit to sense the RFID tags 18.

Once the RFID reader 22 reads each of the tags 18, the mobile information unit 26 is then able to transmit this information utilizing wireless transmission techniques, such as Wi-Fi, LTE or any type of wireless communication technique, to an offsite server 28. The offsite server 28 receives the RFID information from the mobile information unit 26 and processes this information. It is contemplated that the server 28 will include a database that correlates the RFID identification information to a wear part on the mobile pumping unit 10. The server 28 may accumulate all of the readings taken from the mobile information unit 22 to determine whether all of the expected RFID tagged parts remain on the mobile pumping unit 10. A missing RFID tag indicates that the part has been removed, the RFID tag is malfunctioning or that the RFID reader 22 was not in close enough proximity to the tag to make a proper reading. If any of the expected RFID tags are missing from the report received from the mobile information unit 26, an alert could then be sent to the mobile information unit 26 informing the user/operator of this error and provide further instruction the operator or asking for operator feedback through the input device 25.

In addition to receiving information from the mobile information unit 26, the server 28 is also able to communicate information back to the mobile information unit 26 instructing the operator to take action and to provide useful monitoring information to the operator. This information may include warnings or information that parts on the mobile pumping unit are reaching the end of their useful life or that a part that was previously on the mobile unit 10 is no longer being read by the RFID reader 22. The operator can provide input and responses through the input device 25, which may be a touch screen on the unit 26 or as a separate component, such as a keyboard.

One of the inputs provided by the operator can be an identification of the operator of the mobile pumping unit. By providing an identification of the operator, the offsite server will be able to track, monitor and predict wear characteristics for the operator. It has been found that wear characteristics vary from operator to operator depending on how the operator uses the work machine. Identifying the operator allows the offsite server to better monitor each of the operators.

In addition to receiving the information from the RFID reader 22 of the mobile information unit 26, the server 28 can also receive location information and operating information transmitted from the communication unit 24 contained within the mobile pumping unit 10. The communication unit 24 may send GPS information, operating parameters of the pumping unit, time of use information and any other information that may be needed for monitoring operation of the mobile pumping unit 10.

The GPS information is useful for not only identifying the location of the mobile pumping unit 10 but also for monitoring wear on the mobile pumping unit 10. For example, the location of the mobile pumping unit will allow the remote server to adjust wear characteristic that may result from the particular type of aggregate used in the geographic area where the mobile pumping unit 10 is being operated. Some geographic locations will use a much more coarse aggregate, which accelerates the wear on the wear parts of the equipment. The remote server will be able to modify the predicted wear on a part based on the type of aggregate used in the geographic area.

Although a server 28 is shown in Fig. 2, it should be understood that the server 28 could be any type of computer device that is able to store identification information, track usage information and calculate the wear on the individual components of the mobile pumping unit 10.

The server 28 is able to communicate with the equipment owner 32 using various different types of communication techniques, which is illustrated by arrow 30 in Fig. 2. The communication will most likely be through the internet, although direct point to point communication is also contemplated. The equipment owner company 32 is the owner of the mobile pumping unit 10. Based upon the information received from the server 28, the equipment owner company can take various different directives/actions relative to the mobile pumping unit 10. Since the information from the server 28 includes information as to the amount of use of the mobile pumping unit, including time of use, and volume of material pumped, the equipment owner can issue directives to the mobile information unit 26 through the server 28 instructing the operator to take various different actions. These actions can include rotating parts on the mobile pumping unit to extend the lifetime of each part, warning the operator for when replacement of the part may be needed based upon the accumulated time of use or amount of material pumped. Since the equipment owner will now receive information about various different parts included on the mobile pumping unit through the RFID tags 18, the equipment owner will be able to better predict when the parts including the RFID tags are due for replacement based upon the amount of material pumped, the mobile pumping unit conditions of use, which operators are controlling the mobile pumping unit and the aggregate composition based on the geographic location of the mobile pumping unit.

In addition to communication to the equipment owner company 32, the server 28 can also communicate with a part manufacturer 34. The part manufacturer 34 is the manufacturer of the wear parts that include the RFID tags 18. The part manufacturer 34 is able to communicate with both the server 28 through the communication path 36 and with the equipment owner through the communication path 38. The OEM is thus able to track their own manufactured parts on various different mobile pumping units 10 that are owned either by the equipment company 32 or other equipment companies. In this manner, the part manufacturer 34 is able to track the location of parts that they have sold to both the equipment owner company 32 and other equipment owner companies.

The part manufacturer 34 will then be able to track part lifecycles both individually and based upon a total population of parts. Based upon these tracked lifecycle levels, the part manufacturer 34 will be able to make more informed calculations as to when parts that are tagged by the RFID tags 18 are subject to replacement. If the part manufacturer 34 is able to receive information from a large number of equipment companies, the part manufacturer will be able to better predict when a large number of parts may be up for replacement and can make manufacturing decisions accordingly. In addition, the part manufacturer 34 can send targeted sales and marketing messages to the equipment owner 32 advising as to when parts may be due for replacement and possibly providing sales incentives to stimulate additional purchasing decisions. It is contemplated that the part manufacturer 34 could offer rebates, price reductions or other incentives when the part manufacturer determines that parts may be due for replacement on the mobile pumping units.

As can be understood by the above description, the use of RFID tags 18 on parts that may be subject to servicing/replacement/maintenance allows both the equipment owner company 32 and the part manufacturer 34 with the ability to predict when such maintenance/replacement is due. As described, the server 28 receives the RFID tag identification information and correlates this information to specific parts. Based upon this correlation, the server 28 can track both the duration a part has been installed on the mobile pumping unit 10 and also how long and how much material has been pumped through the equipment. This pumping information is received from the communication unit 24 associated with each of the mobile pumping units 10. Based upon the identification of the parts and the operating information, the server 28 can be used to recommend any adjustments to the location, orientation or use of the part on the mobile pumping unit to extend the life of the part. The server can also forecast when the part will need to be replaced given its percentage of life used and current rate of wear over a specific period of use. The server can send messages to the mobile information unit 26 to warn personnel when the percentage of lifecycle exceeds the minimum requirements to avoid unsafe conditions, reduce equipment damage and to reduce equipment downtime.

The information from the server 28 can be relayed to the equipment owner company 32 such that the equipment owner company 32 can also predict maintenance and make planning decisions as to when parts on the mobile pumping unit 10 will be due for replacement. The part manufacturer can use this same information to help guide manufacturing decisions, generate sales information to the owner company 32 and monitor how long equipment they manufacture lasts in the field.

Although the system and method of the present disclosure is shown in use with a mobile pumping unit, it should be understood that any type of mobile work unit that is used in the field and has parts that are subject to wear/replacement could utilize the system of the present disclosure.

As discussed previously, the communication units 24 from the mobile pumping unit 10 sends information to the server 28. This information can include parameters of the equipment, such as engine RPM, horsepower, pipeline pressures, time of use and volume of material pumped.

As stated above, the part manufacturer 34 can receive information from the server 28 regarding all of the parts it manufactures that are located on various mobile pumping units located in the field. In this manner, the part manufacturer 34 will be able to monitor a large percentage of the parts it manufactures. Based upon this monitoring, the part manufacturer 34 will be able to get a large sampling of product performance and will be able to provide more accurate predictions of when parts are due for renewal, how long manufactured parts last in the field and when parts are replaced by equipment owners. In this manner, the part manufacturer may be able to redesign products to enhance this performance, which may not have been possible prior to receiving the information discussed.

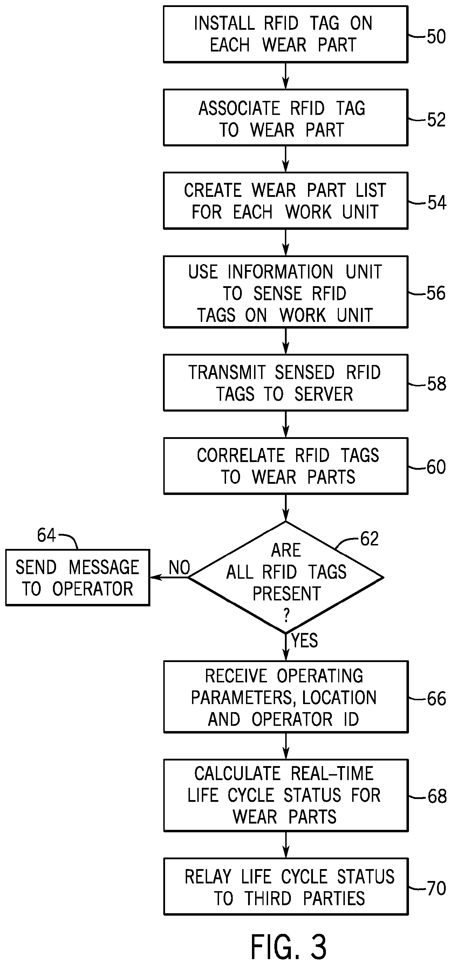

Fig. 3 illustrates a flowchart that depicts a method of monitoring the use of the wear parts in accordance with the present disclosure. The flowchart of Fig. 3 provides one illustration of the method for monitoring the use of wear parts, although other methods are contemplated as being within the scope of the present disclosure.

In initial step 50, an RFID tag is placed on each of the wear parts on the mobile work unit for which monitoring is desired. The RFID tags can be installed on the wear parts either before the wear parts are mounted to the mobile work unit or after the wear parts have been installed on the mobile work unit. As described previously, each of the RFID tags has identification number such that each of the RFID tags can be positively identified by an RFID reader.

Once an RFID tag has been applied to each of the wear parts, the RFID identification information is associated with the specific wear part. For example, if the RFID tag is installed on a section of hose, information about the section of hose is entered into a database and the information is associated with the RFID tag identifier. The wear part identification information can include model number, part number, manufacturer identification information, installation date and any other information that may be important for determining the wear status of the wear part.

Once the RFID tag has been associated with the wear part, a wear part listing is created for the mobile work unit. For example, the mobile work unit will have a part list that identifies the number of RFID tags installed on the mobile pumping unit, which may include the number of hose sections, the number of pipe joints and any other component that is being monitored on the mobile pumping unit. The listing includes not only the parts being monitored but also the RFID tag identification information for each of those parts.

Once this listing has been created, the information unit can be used to identify the RFID tags and associated wear parts on the mobile pumping unit. In step 56, the information unit senses the RFID tags. In an embodiment in which the information unit is mobile, such as shown in Fig. 1, the operator 20 will walk around the mobile pumping unit 10 such that the information unit senses each of the RFID tags. In an embodiment in which the information unit is mounted to the mobile pumping unit, the monitoring unit will read each of the RFID tags.

After the information has been sensed in step 56, the sensed RFID tags are transmitted to either a remote or local server, as shown in step 58. As discussed previously, the server can be either a conventional server or any other type of computer that is able to store information related to the RFID tags and wear parts. In step 60, the server correlates the RFID identification information received from the information unit to a stored list of wear parts. In step 62, the server determines whether all of the RFID tags are present for the mobile pumping unit. If one or more of the RFID tags is not read or is missing, the method moves to step 64 and sends an informational message to the operator indicating that either RFID tags were not read or are missing. The message may require the operator to make another scan of the mobile pumping unit or will require the operator to override the error message. Step 62 thus ensures that all of the RFID tags have been read or have been indicated as missing to provide accurate monitoring of the wear parts.

If all of the RFID tags are present or if the operator overrides the error message, the system moves to step 66 in which the server receives operating parameters from the mobile pumping unit. As described previously, the operating parameters can include engine RPMs, engine horsepower, pumping pipeline pressure, pump run times as well as other information relating to the operation of the mobile pumping unit. These operating parameters are sent from the monitoring unit associated with the mobile pumping unit in the manner described previously.

In addition to the operating parameters, GPS information relating the location of the mobile pumping unit can also be sent to the remote server. The GPS information allows the remote server to know the geographic location of the mobile pumping unit, which can be used to not only identify the physical location but also adjust the wear parameters for the wear parts. In step 66, the operator can also be prompted to enter a unique operator identifier such that the remote server also knows the identity of the operator for the mobile pumping unit.

Once the remote serve has received the operating characteristics, location and operator identification information, the method moves to step 68 where the life cycle status for the wear parts are calculated. The life cycle status can include various information, such as the percentage of the useful life of the wear part remaining, the percentage of the wear life already used and a predicted time when the wear part needs to be replaced. This information can be calculated in real-time based upon both current operating parameters and past operating parameters from the mobile pumping unit.

The real-time life cycle status calculated in step 68 can then be transmitted to interested third parties, such as part manufacturers, owners of the mobile pumping units or any other monitoring location, as indicated in step 70. The real-time life cycle status allows the interested third parties, such as a part manufacturer, to contact the owner of the mobile pumping unit to provide notices of when parts may wear out so that the owner's can be proactive in replacing parts before the parts fail. In addtion, messages can be sent to the owner/operator of the mobile pumping unit to rotate, flip, or turn the wear parts to extend the useful life of the wear part. This physical adjustment message would help the owner/operator fully utilize the useful life of a wear part based on the real-time life cycle status determined in accordance with the present disclosure.

By utilizing the method and system of the present disclosure, part manufacturers can receive information regarding all of the parts it manufactures that are located on various mobile pumping units located in the field. The part manufacturers will thus be able to get a large sampling of product performance and will be able to provide more accurate predictions of when parts are due for renewal, how long manufactured parts last in the field and when parts must be replaced by equipment owners. In this manner, the part manufacturer can tailor product designs to enhance performance.

Likewise, the owner of the mobile pumping unit can utilize the information calculated in step 68 to help determine how operators are running machines and when the machine will wear down and how close the machine is to its end of life. The information regarding the operator and location of the machine can be used by the owner to allow the owner to educate and/or compensate operators based upon measured characteristics and to better understand maintenance costs and adjust pricing accordingly. The information received and analyzed by the server can be used to create an industry-wide rating system for each operator, such as the operator's ability to minimize wear on the mobile pumping units they are operating. Further, the information received by the server can be used to create an industry-wide concrete mix wear index based upon geographic location. As indicated above, different geographic areas have different aggregate mixes which affect the wear life of parts on the mobile pumping unit. Based upon this information, part manufacturers can suggest different types of products that may be more suited for different geographic locations. For example, higher wear-resistant pipes can be used in areas that have a more aggressive aggregate while less expensive, lower wear-resistant pipes can be used in geographic areas in which the aggregate is less abrasive.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of monitoring the use of wear parts on a work unit, the method comprising the steps of:
installing an RFID tag on at least one wear part of the mobile work unit;
sensing the RFID tag in a mobile information unit located near the work unit;
correlating the RFID tag to the identity of the wear part;
receiving operating parameters of the work unit; and
predicting the life cycle of the wear part based on the operating parameters of the work unit.

2. A method of monitoring the use of a plurality of wear parts on a work unit, the method comprising the steps of:
installing an RFID tag on each of the plurality of wear parts of the mobile work unit;
sensing the RFID tags in an information unit located near the work unit;
correlating the RFID tag to the identity of the wear parts at a remote location;
receiving operating parameters of the work unit at a remote location; and
predicting the life cycle of the wear part based on the operating parameters of the work unit.

3. The method of claim 1 or claim 2 wherein the operating parameters are received in a server remote from the work unit and the RFID tags are correlated to the wear parts in the server.

4. The method of claim 1 or claim 2 further comprising the steps of:
identifying the geographic location of the work unit; and
adjusting the predicted life cycle of the wear part based on the geographic location of the work unit.

5. The method of claim 1 or claim 2 further comprising the steps of
identifying an operator of the work unit; and
adjusting the predicted life cycle of the wear part based on the identity of the operator of the work unit.

6. The method of claim 1 or claim 2 further comprising the step of correlating work unit operating parameters to wear characteristics for the wear part and predicting real-time life cycle status of the wear part based on the accumulated operating parameters.

7. The method of claim 6 further comprising the step of relaying the real-time life cycle status of the wear parts to a part manufacturer.

8. The method of claim 6 further comprising the step of relaying promotional sales material to an equipment owner based on the predicted life cycle status.

9. The method of claim 5 further comprising the step of relaying replacement messages or adjustment messages to an operator of the work unit based on the real-time life cycle status.

10. The method of claim 2 further comprising the steps of:
creating a list of the plurality of wear parts and RFID tags for the mobile work unit;
determining if all of the RFID tags for the mobile work unit have been sensed; and
generating an alert when less than all of the RFID tags have been sensed.

11. The method of claim 5 further comprising the step of monitoring the historic actions of the operator and generating a rating for the operator.

12. A method of monitoring the use of a plurality of wear parts on a work unit, the method comprising the steps of:
installing a unique identification device on each of the plurality of wear parts of the mobile work unit;
entering each of the identification devices on the mobile work unit into an information unit located near the work unit;
correlating entered identification devices to the plurality of the wear parts;
receiving operating parameters of the work unit at a remote location;
determining the geographic location of the work unit; and
predicting the life cycle for each of the plurality the wear part based on the operating parameters and the geographic location of the work unit.

13. The method of claim 12 further comprising the steps of
creating a list of the plurality of wear parts and identification devices for the mobile work unit;
determining if all of the identification devices for the mobile work unit have been entered; and
generating an alert when less than all of the identification devices have been entered for the mobile work unit.

14. The method of claim 12 further comprising the step of correlating work unit operating parameters and the geographic location to wear characteristics for the wear parts and predicting real-time life cycle status of the wear parts based on the accumulated operating parameters.
